(19) Europäisches Patentamt
European Patent Office
Office européen des brevets

(11) Veröffentlichungsnummer: **0 077 299**
**A1**

(12) **EUROPÄISCHE PATENTANMELDUNG**

(21) Anmeldenummer: **82810415.8**

(22) Anmeldetag: **07.10.82**

(51) Int. Cl.³: **C 07 F 7/22**, A 01 N 55/04

(30) Priorität: **13.10.81 CH 6542/81**

(43) Veröffentlichungstag der Anmeldung: **20.04.83**
**Patentblatt 83/16**

(84) Benannte Vertragsstaaten: **AT BE CH DE FR GB IT LI NL**

(71) Anmelder: **CIBA-GEIGY AG, Patentabteilung Postfach, CH-4002 Basel (CH)**

(72) Erfinder: **Wehner, Wolfgang, Dr., Wetzbach 34, D-6144 Zwingenberg (DE)**
Erfinder: **Ackermann, Peter, Dr., Hangelimattweg 113, CH-4148 Pfeffingen (DE)**

(54) **Triorganozinnuracilverbindungen, Verfahren zu ihrer Herstellung und ihre Verwendung in der Schädlingsbekämpfung.**

(57) Triorganozinnuracilverbindungen der Formel

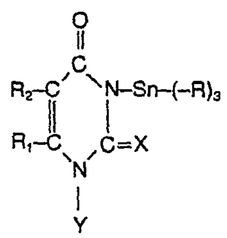

worin R $C_1$–$C_6$-Alkyl, $C_5$–$C_8$-Cycloalkyl, Phenyl oder

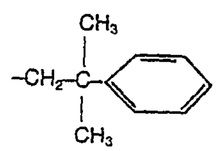

$R_1$ und $R_2$ je Wasserstoff, $C_1$–$C_4$-Alkyl, Phenyl, Halogen, Hydroxy, Amino oder $-COOSn-(-R)_3$, X Sauerstoff oder Schwefel und Y Wasserstoff oder $-Sn-(-R)_3$ bedeuten, ein Verfahren zur Herstellung dieser Verbindungen und ihre Verwendung in der Schädlingsbekämpfung werden beschrieben.

EP 0 077 299 A1

0077299



5-13595/+

CIBA-GEIGY AG
Basel (Schweiz)

# Triorganozinnuracilverbindungen, Verfahren zu ihrer Herstellung und ihre Verwendung in der Schädlingsbekämpfung.

Die vorliegende Erfindung betrifft Triorganozinnuracilverbindungen, Verfahren zu ihrer Herstellung und ihre Verwendung in der Schädlingsbekämpfung.

Die neuartigen Zinnverbindungen haben die Formel

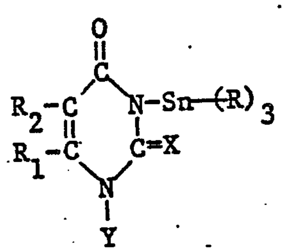

(I)

worin R $C_1$-$C_6$-Alkyl, $C_5$-$C_8$-Cycloalkyl, Phenyl oder

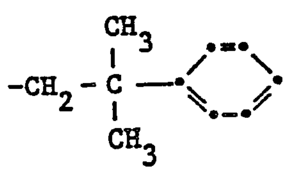

,

$R_1$ und $R_2$ je Wasserstoff, $C_1$-$C_4$-Alkyl, Phenyl, Halogen, Hydroxy, Amino oder $-COOSn(R)_3$,

X Sauerstoff oder Schwefel und

Y Wasserstoff oder $-Sn(R)_3$ bedeuten.

Unter Halogen ist Fluor, Chlor, Brom oder Jod, insbesondere aber Chlor, zu verstehen.

Als $C_5$ bis $C_8$ Cycloalkyl kommen Cyclopentyl, Cyclohexyl oder Cyclooctyl in Frage.

Die Alkylgruppen bei R, $R_1$ und $R_2$ können geradkettig oder verzweigt sein. Beispiele solcher Gruppen sind: Methyl, Aethyl, n-Butyl, n-Pentyl, n-Hexyl, sowie ihre Isomeren wie z.B. Isopropyl, i-, sek.- und tert.-Butyl.

Bevorzugt sind Verbindungen der Formel I, worin

R $C_5$-$C_8$-Cycloalkyl oder Phenyl,

$R_1$ und $R_2$ je Wasserstoff,

X Sauerstoff oder Schwefel und

Y $-Sn(R)_3$ bedeuten.

Die Verbindungen der Formel I können nach an sich bekannten Methoden z.B. wie folgt hergestellt werden:

1. 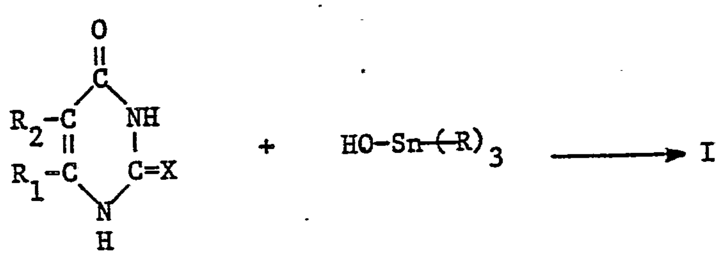

(II) (III)

2. 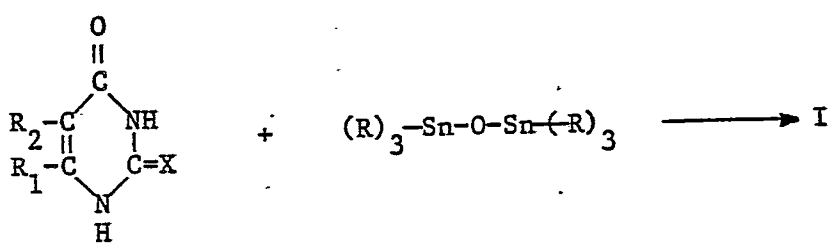

(II) (IV)

In den Formeln II, III und IV haben R, $R_1$, $R_2$ und X die für die Formel I angegebene Bedeutung.

Die Verfahren 1 und 2 werden zweckmässig bei einer Temperature zwischen 30 bis180°C, vorzugsweise bei 80 bis 150°C, bei normalem oder leicht reduziertem Druck und vorzugsweise in Gegenwart eines gegenüber den Reaktionsteilnehmern inerten Lösungs- oder Verdünnungsmittel durchgeführt.

Als Lösungs- oder Verdünnungsmittel eignen sich z.B. nichthalogenierte oder halogenierte Kohlenwasserstoffe wie Petroläther, Toluol, Chloroform oder Methylenchlorid; Alkohole wie Methanol und Aethanol oder Isopropanol; Aether und ätherartige Verbindungen wie Diäthyläther, Dioxan und Tetrahydrofuran; Ketone wie Aceton, Cyclohexan oder Methyläthylketon. Die Ausgangsstoffe der Formeln II bis IV sind bekannt und können nach bekannten Methoden hergestellt werden.

Die Verbindungen der Formel I eignen sich zur Bekämpfung von verschiedenartigen Schädlingen an Tieren und Pflanzen. Sie haben auch pflanzenwuchsregulierende Wirkung.

Insbesondere eignen sich die Verbindungen der Formel I zur Bekämpfung aller Entwicklungsstadien von phytopathogenen und tierparasitären Insekten z.B. der Ordnungen Lepidoptera, Coleoptera, Homoptera, Diptera, Thysanoptera, Orthoptera, Anoplura, Siphonaptera, Mallophage, Thysanura, Isoptera, Psocoptera und Hymenoptera und tierparasitären und phytopathogenen Milben und Zecken der Ordnung Akarina.

Vor allem eignen sich Verbindungen der Formel I zur Bekämpfung von fressenden Insekten, wie z.B. Anthonomus grandis und von pflanzenschädigenden Milben, wie z.B. Tetranychus urticae und Tetranychus cinnabarinus.

Wirkstoffe der Formel I haben aber eine besonders gute fungizide Wirkung.

So sind diese Wirkstoffe gegen die den folgenden Klassen angehörenden phytopathogenen Pilze wirksam: Ascomycetes (z.B. Erysiphaceae, Fusarium, Helminthosporium): Basidiomycetes wie Puccinia, Rhizoctonia, Tilletia, Hemileia; Fungi imperfecti (z.B. Cercospora, Botrytis, Alternaria, Septoria); Phycomycetes wie Phytophthora. Ueberdies wirken die Verbindungen der Formel I systemisch. Die Verbindungen der Formel I werden vorteilhaft als Beizmittel zur Behandlung von Saatgut und Vorrat (Früchte, Knollen, Körner) und Pflanzenstecklingen zum Schutz vor Pilzinfektionen sowie gegen im Erdboden auftretende phytopathogene Pilze eingesetzt.

Die Verbindungen der Formel I werden in unveränderter Form oder vorzugsweise zusammen mit den in der Formulierungstechnik üblichen Hilfsmitteln eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder

Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Die in der Formulierungstechnik gebräuchlichen Tenside sind u.a. in folgender Publikation beschrieben:
"Mc Cutcheon's Detergents and Emulsifiers Annual" MC Publishing Corp., Ringwood, New Jersey, 1979.

Die pestiziden Zubereitungen enthalten in der Regel 0,1 bis 99 %, insbesondere 0,1 bis 95 %, Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

<u>Formulierungsbeispiele für Wirkstoffe der Formel I</u>

<u>(% = Gewichtsprozent)</u>

| <u>Spritzpulver</u> | a) | b) |
|---|---|---|
| Wirkstoff | 20% | 60% |
| Na-Ligninsulfonat | 5% | 5% |
| Na-Laurylsulfat | 3% | - |
| Na-Diisobutylnaphthalinsulfonat | - | 6% |
| Octylphenolpolyäthylenglykoläther (7-8 Mol AeO) | - | 2% |
| Hochdisperse Kieselsäure | 5% | 27% |
| Kaolin | 67% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

<u>Emulsions-Konzentrat</u>

| | |
|---|---|
| Wirkstoff | 10% |
| Octylphenolpolyäthylenglykoläther (4-5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| <u>Stäubemittel</u> | a) | b) |
|---|---|---|
| Wirkstoff | 5% | 8% |
| Talkum | 95% | - |
| Kaolin | - | 92% |

Man erhält anwendungsfertige Stäubemittel, indem der Wirkstoff mit dem Träger vermischt und auf einer geeigneten Mühle vermahlen wird.

<u>Extruder Granulat</u>

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

<u>Suspensions-Konzentrat</u>

| | |
|---|---|
| Wirkstoff | 40% |
| Aethylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 1: Herstellung von 1,3-Bis-triphenylzinn-2-thiouracil [Verb. Nr. 15]

Eine Suspension aus 32,0 g 2-Thiouracil und 183,5 g Triphenylzinnhydroxid in 300 ml Toluol werden am Rückfluss vier Stunden gekocht, wobei das entstehende Reaktionswasser azeotrop abdestilliert. Nach dem Abkühlen wird die Lösung klarfiltriert und im Vakuum von flüchtigen Bestandteilen befreit.

Man erhält die Verbindung der Formel

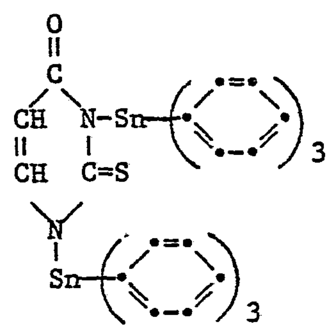

in kristalliner Form mit einem Schmelzpunkt von 158-160°C.

Auf analoge Weise werden auch folgende Verbindungen hergestellt

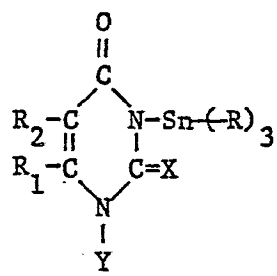

| R | $R_1$ | $R_2$ | X | Y | phys. Daten |
|---|---|---|---|---|---|
| $-C_4H_9(n)$ | H | H | O | $-Sn(R)_3$ | Smp: 51-53°C |
| $-C_4H_9(n)$ | H | H | S | $-Sn(R)_3$ | viskoses Oel |
| 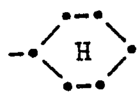 | H | H | S | $-Sn(R)_3$ | Smp: 56-58°C |
| $-C_4H_9(n)$ | $-CH_3$ | H | O | H | Smp: 90-92°C |
| $-C_4H_9(n)$ | -OH | H | O | $-Sn(R)_3$ | Smp: 50-52°C |
| $-C_4H_9(n)$ | -OH | H | S | H | Smp: $>$250°C |
| $-C_4H_9(n)$ | -OH | H | S | $-Sn(R)_3$ | Smp: 146-148°C |
| 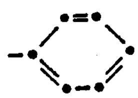 | -OH | H | S | H | Smp: $>$350°C |
| 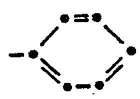 | -OH | H | S | $-Sn(R)_3$ | Smp: $>$350°C |
| $-C_4H_9(n)$ | $-NH_2$ | H | S | $-Sn(R)_3$ | viskoses Oel |
| $-C_4H_9(n)$ | $-COOSn(R)_3$ | H | O | H | Smp: 152-154°C |
| $-C_4H_9(n)$ | $-COOSn(R)_3$ | H | O | $-Sn(R)_3$ | Smp: 59-60°C |
| 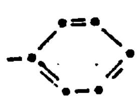 | $-C_3H_7(n)$ | H | S | H | Smp.: 219-221°C |
| $-C_4H_9(n)$ | $-C_3H_7(n)$ | H | O | $-Sn(R)_3$ | viskoses Oel |
| 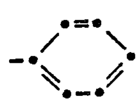 | H | H | S | $-Sn(R)_3$ | Smp.158-160°C |
| $-C_4H_9(n)$ | $-CH_3$ | H | O | $-Sn(R)_3$ | Smp.42-46°C |

| R | $R_1$ | $R_2$ | X | Y | phys. Daten |
|---|---|---|---|---|---|
| 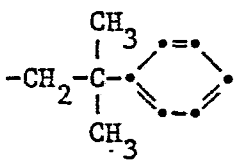 | H | H | S | $-Sn-(R)_3$ | Harz |
| 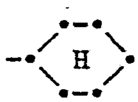 | H | H | O | $-Sn-(R)_3$ | Oel. |

Biologische Beispiele

Beispiel 1: Wirkung gegen Phytophthora infestans auf Tomatenpflanzen Residual-protektive Wirkung

Tomatenpflanzen wurden nach 3-wöchiger Anzucht mit einer aus Spritzpulver des Wirkstoffes hergestellten Spritzbrühe (0,02 % Aktivsubstanz) besprüht. Nach 24 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90 - 100 % relativer Luftfeuchtigkeit und 20°C.

Die 18 Verbindungen gemäss dem Herstellungsbeispiel haben eine 100 %ige Wirkung gegen Phytophthora. Verbindung Nr. 15 der Tabelle zeigt diese Wirkung auch in 0,006 % Konzentration.

Beispiel 2: Residual-protektive Wirkung gegen Venturia inaequalis auf Apfeltrieben

Apfelstecklinge mit 10-20 cm langen Frischtrieben werden mit einer aus Spritzpulver des Wirkstoffes hergestellten Spritzbrühe (0,06%

Aktivsubstanz) besprüht. Nach 24 Stunden werden die behandelten Pflanzen mit einer Konidiensuspension des Pilzes infiziert. Die Pflanzen werden dann während 5 Tagen bei 90-100% relativer Luftfeuchtigkeit inkubiert und während 10 weiteren Tagen in einem Gewächshaus bei 20-24°C aufgestellt. Der Schorfbefall wird 15 Tage nach der Infektion beurteilt.

Die 18 Verbindungen gemäss dem Herstellungsbeispiel hemmen den Krankheitsbefall bis auf weniger als 10 %.

Beispiel 3: Wirkung gegen Cercospora arachidicola auf Erdnusspflanzen

Residual-protektive Wirkung

10-15 cm hohe Erdnusspflanzen werden mit einer aus Spritzpulver der Wirksubstanz hergestellten Spritzbrühe (0,006% Aktivsubstanz) besprüht und 48 Stunden später mit einer Konidiensuspension des Pilzes infiziert. Die infizierten Pflanzen werden während 72 Stunden bei ca. 21°C und hoher Luftfeuchtigkeit inkubiert und anschliessend bis zum Auftreten der typischen Blattflecken in einem Gewächshaus aufgestellt. Die Beurteilung der fungiziden Wirkung erfolgt 12 Tage nach der Infektion basierend auf Anzahl und Grösse der auftretenden Flecken.

Im Vergleich zu unbehandelten, aber infizierten Kontrollpflanzen (Anzahl und Grösse der Flecken = 100%), zeigen Erdnusspflanzen, die mit einer der 18 Verbindungen gemäss dem Herstellungsbeispiel behandelt wurden, einen stark reduzierten Cercospora-Befall (0-10%). Die Verbindungen Nr. 2 und Nr. 15 der Tabelle zeigen diese Wirkung auch noch in einer Konzentration von 0,002 %.

Beispiel 5: Wirkung gegen Septoria apii auf Sellerie

Residual-protektive Wirkung

10 - 15 cm hohe Selleriepflanzen wurden mit einer aus Spritzpulver der Wirksubstanz hergestellten Spritzbrühe (0,06 % Aktivsubstanz) besprüht. Nach 24 Stunden wurden die behandelten Pflanzen mit einer Konidiensuspension des Pilzes infiziert. Anschliessend wurden die Pflanzen während 5 Tagen bei 90 - 100 % relativer Luftfeuchtigkeit inkubiert und während 10 weiteren Tagen in einem Gewächshaus bei 20 - 24°C aufgestellt. 15 Tage nach der Infektion wurde der Pilzbefall beurteilt.

Der Krankheitsbefall wurde bei Behandlung mit einer der Verbindungen Nr. 1 - 18 auf unter 20 % zurückgedrängt. Bei Behandlung mit Verbindung Nr. 2 wurde der Befall auf unter 10 % reduziert. Bei Behandlung mit Verbindung Nr. 15 trat überhaupt kein sichtbarer Befall auf.

Patentansprüche

1. Triorganozinnuracilverbindungen der Formel

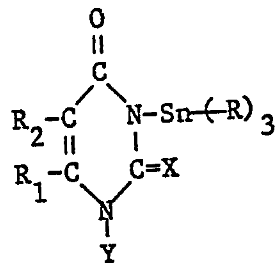

worin R $C_1$-$C_6$-Alkyl, $C_5$-$C_8$-Cycloalkyl, Phenyl oder

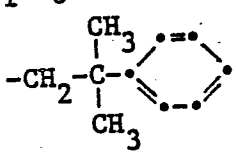 ,

$R_1$ und $R_2$ je Wasserstoff, $C_1$-$C_4$-Alkyl, Phenyl, Halogen, Hydroxy, Amino oder $-COOSn(R)_3$ ,

X Sauerstoff oder Schwefel und

Y Wasserstoff oder $-Sn(R)_3$ bedeuten.

2. Verbindungen gemäss Anspruch 1, worin

R $C_5$-$C_8$-Cycloalkyl oder Phenyl,

$R_1$ und $R_2$ Wasserstoff,

X Sauerstoff oder Schwefel und

Y $-Sn(R)_3$ bedeuten.

3. Die Verbindung gemäss Anspruch 2 der Formel

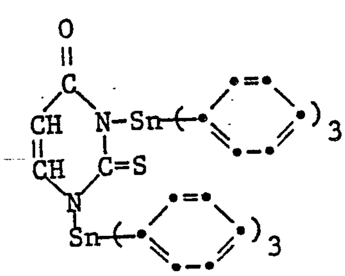

4. Die Verbindung gemäss Anspruch 1 der Formel

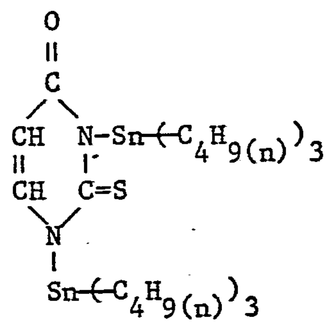

5. Verfahren zur Herstellung von Verbindungen gemäss Anspruch 1, dadurch gekennzeichnet, dass man eine Verbindung der Formel

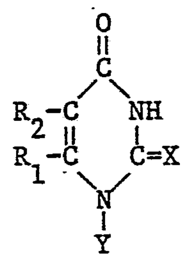

entweder mit einer Verbindung der Formel $HO-Sn-(R)_3$ oder einer Verbindung der Formel $(R)_3Sn-O-Sn-(R)_3$ umsetzt, worin R, $R_1$, $R_2$, X und Y die im Anspruch 1 angegebene Bedeutung haben.

6. Schädlingsbekämpfungsmittel, welches als Wirkstoff eine Verbindung gemäss Anspruch 1 enthält.

7. Mittel gemäss Anspruch 6, welches als Wirkstoff eine Verbindung gemäss Anspruch 2 enthält.

8. Mittel gemäss Anspruch 6, welches als Wirkstoff eine Verbindung gemäss Anspruch 3 enthält.

9. Mittel gemäss Anspruch 6, welches als Wirkstoff eine Verbindung gemäss Anspruch 4 enthält.

10. Die Verwendung einer Verbindung gemäss Anspruch 1 zur Bekämpfung von Schädlingen an Tieren und Pflanzen.

11. Die Verwendung gemäss Anspruch 10 zur Bekämpfung von phytopathogenen Pilzen.

Europäisches Patentamt

# EUROPÄISCHER RECHERCHENBERICHT

0077299

Nummer der Anmeldung

EP 82 81 0415

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | --- JOURNAL OF ORGANOMETALLIC CHEMISTRY, 145, 1978, Sieten C37-C40 T. OGAWA et al.: "A stannyl modification of the Hilbert-Johnson method for the synthesis of pyrimidine nucleosides" * Seite C37, Zeilen 7-9 * ----- | 1,4,5 | C 07 F 7/22<br>A 01 N 55/04 |
| | | | RECHERCHIERTE SACHGEBIETE (Int. Cl. 3) |
| | | | C 07 F 7/00 |

Der vorliegende Recherchenbericht wurde für alle Patentansprüche erstellt.

| Recherchenort | Abschlußdatum der Recherche | Prüfer |
|---|---|---|
| DEN HAAG | 11-01-1983 | SUTER M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82